# EUROPÄISCHE PATENTSCHRIFT

(11) **EP 4 419 456 B1**
(45) Veröffentlichungstag und Bekanntmachung des Hinweises auf die Patenterteilung: **22.10.2025**
(21) Anmeldenummer: 22801469.2
(22) Anmeldetag: 13.10.2022
(51) Int. Cl.: B27B 31/00, B65G 15/14, B65G 17/00, B65G 17/14, B65G 21/02, B65G 21/22, B65G 35/00, B65G 47/82, B65G 47/244, B65G 47/52, B65G 21/20, B07C 5/14

(54) **UMLENKVORRICHTUNG FÜR LÄNGLICHES STÜCKGUT**
DEFLECTING DEVICE FOR AN ELONGATE ITEM
DISPOSITIF DE DÉVIATION POUR UN ARTICLE ALLONGÉ

(30) Priorität: 20.10.2021 AT 508342021; 20.10.2021 AT 508352021; 25.02.2022 AT 501262022
(43) Veröffentlichungstag der Anmeldung: 28.08.2024
(73) Patentinhaber: Springer Maschinenfabrik GmbH, 9360 Friesach (AT)
(72) Erfinder: KNAPP, Florian, 8812 St. Blasen (AT); PÖTSCHER, Julian, 9300 St. Veit an der Glan (AT)
(74) Vertreter: Gibler & Poth Patentanwälte KG
(86) Internationale Anmeldenummer: PCT/EP2022/078487
(87) Internationale Veröffentlichungsnummer: WO 2023/066779

(56) Entgegenhaltungen:
- EP-A2- 1 873 089
- AT-B- 343 539
- DE-A1- 2 014 857
- DE-A1- 3 024 699
- US-A- 3 960 267
- US-A- 4 889 224

## Beschreibung

Die Erfindung betrifft eine Umlenkvorrichtung für längliches Stückgut gemäß dem Oberbegriff des Patentanspruches 1.

Es ist bekannt, dass längliches Stückgut im Quertransport sowie im Längstransport gefördert wird. Dabei werden derartige Fördervorrichtungen für gewöhnlich hintereinander angeordnet, wodurch eine Umlenkung des länglichen Stückgutes aus dem Quertransport in den Längstransport bzw. vice versa ermöglicht wird.

Weiters ist bekannt, dass sich herkömmliche Sortieranlagen, insbesondere Rundholzsortieranlagen, in Ihren Ausführungsformen aufgrund der Gegebenheiten der Aufstellungsorte, sowie aufgrund der Bedürfnisse der Kunden unterscheiden. Dabei umfassen Sortieranlagen gewöhnlich eine Annahmeeinheit zur Übergabe des länglichen Stückgutes aus dem Quertransport in den Längstransport, sowie eine an die Annahmeeinheit anschließend angeordnete Längssortierstrecke.

Aus der US 4 889 224 A, welche die Merkmale des Oberbegriffs des Anspruchs 1 offenbart, ist ein Fördersystem umfassend drei Bandförderer bekannt,
welches Fördersystem Fördergegenstände in Längstransportrichtung ausrichtet. Aus der US 3 960 267 A ist eine Umlenkvorrichtung für Rundhölzer mit zwei Umlenkplatten bekannt.

Aus der EP 1 873 089 A2 ist eine Förderbandeinrichtung umfasst eine rinnenförmige Förderbahn mit Förderbänder in V-Stellung bekannt, welche dazu vorgesehen ist Gegenstände zu einer Charakterisierungseinrichtung hin zu fördern.

Aus der AT 343 539 B ist eine Vorrichtung zum Wenden von länglichem Stückgut, insbesondere Rundholz, mit zwei gegenläufig drehbaren Wendesterne bekannt. Aus der DE 20 14 857 A1 und der DE 30 24 699 A1 sind Rundholzsortiereinrichtungen bekannt.

Nachteilig an derzeit bekannten Sortieranlagen ist, dass bei der Übergabe von länglichem Stückgut aus dem Quertransport in den Längstransport mittels einer gewöhnlichen Annahmeeinheit unterschiedlich große Lücken zwischen den länglichen Stückgütern auf den Längstransportern entstehen. In einem gängigen Förderprozess werden diese Lücken zwischen den länglichen Stückgütern nachfolgend in der Längssortierstrecke mittels Sensoren detektiert und mittels einer Anpassung der Fördergeschwindigkeit wird versucht, eine einheitlich große Lücke zu erhalten.

Aufgabe der Erfindung ist es daher eine Umlenkvorrichtung der eingangs genannten Art anzugeben, mit welcher die genannten Nachteile vermieden werden können, mit welcher eine umweltfreundliche und harmonisierte Übergabe von länglichem Stückgut aus dem Quertransport in den Längstransport erreicht wird.

Erfindungsgemäß wird dies durch die Merkmale des Patentanspruches 1 erreicht.

Dadurch ergibt sich der Vorteil, dass längliches Stückgut bzw. länglicher Stückgüter derart aus dem Quertransport in den Längstransport übergeben werden können, dass eine möglichst einheitliche Lücke zwischen den länglichen Stückgütern erhalten wird. Dadurch wird der Regelaufwand zur Vereinheitlichung der Lücken zwischen den länglichen Stückgütern in einer an die Umlenkvorrichtung anschließenden Längssortierstrecke deutlich reduziert. Durch die Ausbildung und Anordnung der bandförmigen Förderer können längliche Stückgüter schneller und mit kürzeren Zeitintervallen zwischen den länglichen Stückgütern aus dem Quertransport in den Längstransport übergeben werden, da die Lücken zwischen den länglichen Stückgütern bereits bei der Übergabe der länglichen Stückgüter aus dem Quertransport in den Längstransport im Wesentlichen einheitlich ausgebildet werden. Dadurch kann speziell bei der Einspeisung eines länglichen Stückgutes von einer Seite der Umlenkvorrichtung der Förderprozess deutlich beschleunigt werden. Durch den Aufnahmebereich ergibt sich auch der Vorteil, dass die Lücken zwischen länglichen Stückgütern unterschiedlicher Abmessungen im Wesentlichen einheitlich ausgebildet werden, nachdem die länglichen Stückgüter bei der Übergabe aus dem Quertransport in den Längstransport schneller mit einer größeren Fläche der zumindest zwei bandförmigen Förderer in Kontakt gelangen. Dadurch werden die länglichen Stückgüter schneller in Längstransportrichtung zentriert und folglich schneller aus den Aufnahmebereich abtransportiert. Durch den Aufnahmebereich und der Förderung der länglichen Stückgüter auf den zumindest zwei bandförmigen Förderern werden auch keine Anlaufkanten ausgebildet. Dadurch können die länglichen Stückgüter nicht an seitlichen Verblechungen der Umlenkvorrichtung anstoßen, wodurch die Fördergeschwindigkeit der länglichen Stückgüter nicht reduziert wird. Dadurch wird auch in vorteilhafterweise eine Pendelbewegung des länglichen Stückgutes bei der Aufnahme des länglichen Stückgutes aus dem Quertransport unterbunden. Dabei hat sich dieser Effekt besonders bei kürzeren Stückgütern als besonders effizienzsteigernd für den Förderprozess erwiesen. Weiters kann durch die Ausbildung des Aufnahmebereiches durch die zumindest zwei bandförmigen Förderer auf eine Ölschmierung an freiliegenden Bauteilen der Umlenkvorrichtung verzichtet werden. Durch diesen Wegfall der Ölschmierung kann somit kein Öl durch die Umlenkvorrichtung selbst an dem Aufstellungsort der Umlenkvorrichtung in die Umwelt gelangen.

Die Erfindung betrifft weiters eine Sortieranlage mit wenigstens einer Umlenkvorrichtung gemäß dem Patentanspruch 10.

Die Unteransprüche betreffen weitere vorteilhafte Ausgestaltungen der Erfindung.

Ausdrücklich wird hiermit auf den Wortlaut der Patentansprüche Bezug genommen, wodurch die Patentansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine bevorzugte Ausführungsform einer Umlenkvorrichtung für längliches Stückgut in axonometrischer Ansicht,
Fig. 2 die bevorzugte Ausführungsform der Umlenkvorrichtung für längliches Stückgut in Frontansicht und
Fig. 3 die bevorzugte Ausführungsform der Umlenkvorrichtung für längliches Stückgut in Draufsicht.
Fig. 4 eine bevorzugte Ausführungsform einer Förderanlage einer Sortieranlage zum Längstransport von länglichem Stückgut in axonometrischer Darstellung,
Fig. 5 einen Schnitt senkrecht zur Längstransportrichtung der bevorzugten Ausführungsform der Förderanlage der Sortieranlage,
Fig. 6 ein Detail der bevorzugten Ausführungsform der Förderanlage der Sortieranlage zum Längstransport von länglichem Stückgut,

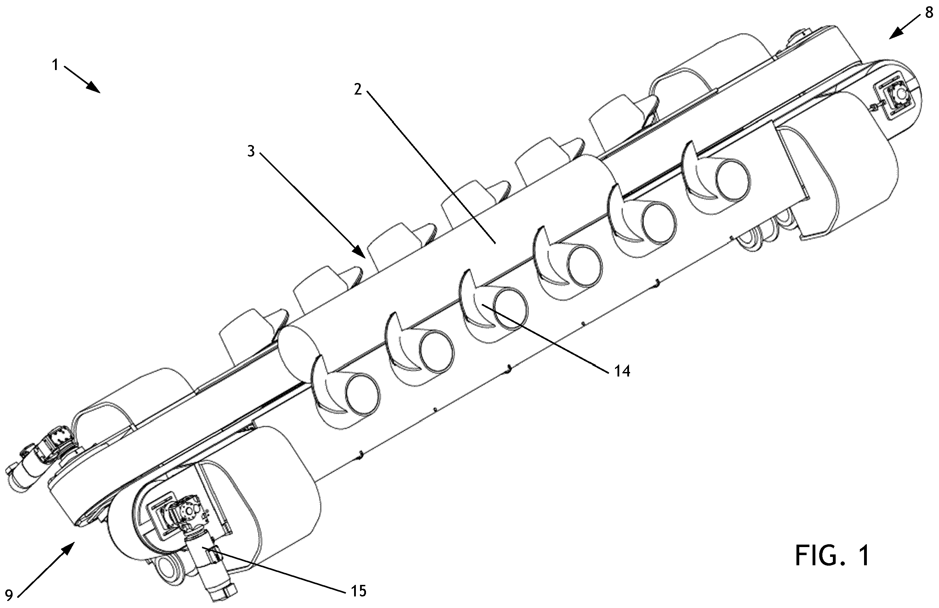

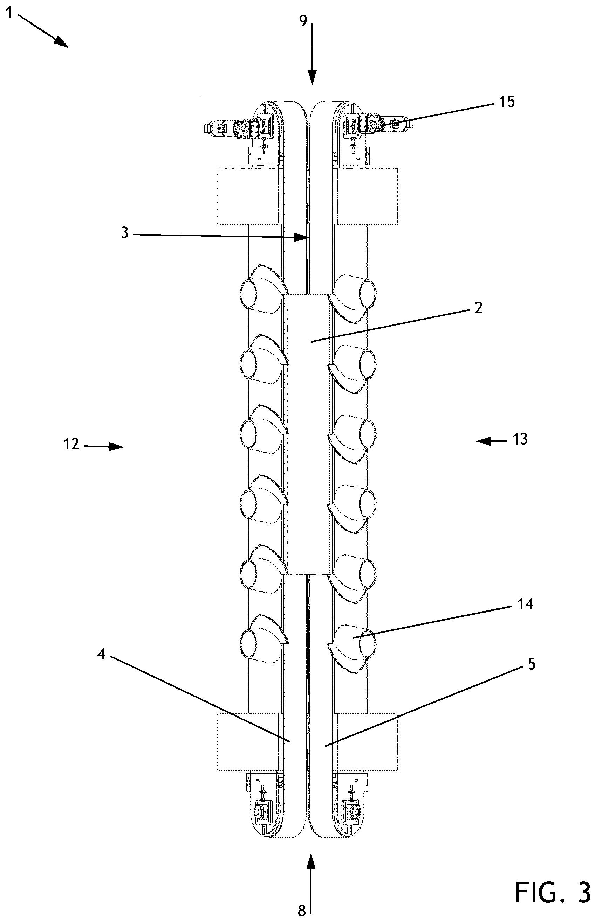

Die Fig. 1 bis 3 zeigen zumindest Teile einer bevorzugten Ausführungsform einer Umlenkvorrichtung 1 für längliches Stückgut 2, wobei die Umlenkvorrichtung 1 einen Aufnahmebereich 3 aufweist, wobei der Aufnahmebereich 3 dazu ausgebildet ist, das längliche Stückgut 2 eingangsseitig im Quertransport aufzunehmen und das längliche Stückgut 2 ausgangsseitig im Längstransport abzugeben, wobei die Umlenkvorrichtung 1 zumindest zwei in einem Winkel zueinander angeordnete bandförmige Förderer 4, 5 in Längstransportrichtung 21 umfasst, wobei die zumindest zwei bandförmigen Förderer 4, 5 in einem Betriebszustand der Umlenkvorrichtung 1 den Aufnahmebereich 3 aufspannen.

Es ist weiters eine Sortieranlage mit wenigstens einer Umlenkvorrichtung 1 vorgesehen.

Dadurch ergibt sich der Vorteil, dass längliches Stückgut bzw. länglicher Stückgüter 2 derart aus dem Quertransport in den Längstransport übergeben werden können, dass eine möglichst einheitliche Lücke zwischen den länglichen Stückgütern 2 erhalten wird. Dadurch wird der Regelaufwand zur Vereinheitlichung der Lücken zwischen den länglichen Stückgütern 2 in einer an die Umlenkvorrichtung 1 anschließenden Längssortierstrecke deutlich reduziert. Durch die Ausbildung und Anordnung der bandförmigen Förderer 4, 5 können längliche Stückgüter 2 schneller und mit kürzeren Zeitintervallen zwischen den länglichen Stückgütern 2 aus dem Quertransport in den Längstransport übergeben werden, da die Lücken zwischen den länglichen Stückgütern 2 bereits bei der Übergabe der länglichen Stückgüter 2 aus dem Quertransport in den Längstransport im Wesentlichen einheitlich ausgebildet werden. Dadurch kann speziell bei der Einspeisung eines länglichen Stückgutes 2 von einer Seite der Umlenkvorrichtung 1 der Förderprozess deutlich beschleunigt werden. Durch den Aufnahmebereich 3 ergibt sich auch der Vorteil, dass die Lücken zwischen länglichen Stückgütern 2 unterschiedlicher Abmessungen im Wesentlichen einheitlich ausgebildet werden, nachdem die länglichen Stückgüter 2 bei der Übergabe aus dem Quertransport in den Längstransport schneller mit einer größeren Fläche der zumindest zwei bandförmigen Förderer 4, 5 in Kontakt gelangen. Dadurch werden die länglichen Stückgüter 2 schneller in Längstransportrichtung 21 zentriert und folglich schneller aus den Aufnahmebereich 3 abtransportiert. Durch den Aufnahmebereich 3 und der Förderung der länglichen Stückgüter 2 auf den zumindest zwei bandförmigen Förderern 4,5 werden auch keine Anlaufkanten ausgebildet. Dadurch können die länglichen Stückgüter 2 nicht an seitlichen Verblechungen der Umlenkvorrichtung 1 anstoßen, wodurch die Fördergeschwindigkeit der länglichen Stückgüter 2 nicht reduziert wird. Dadurch wird auch in vorteilhafterweise eine Pendelbewegung des länglichen Stückgutes 2 bei der Aufnahme des länglichen Stückgutes 2 aus dem Quertransport unterbunden. Dabei hat sich dieser Effekt besonders bei kürzeren Stückgütern 2 als besonders effizienzsteigernd für den Förderprozess erwiesen. Weiters kann durch die Ausbildung des Aufnahmebereiches 3 durch die zumindest zwei bandförmigen Förderer 4, 5 auf eine Ölschmierung an freiliegenden Bauteilen der Umlenkvorrichtung 1 verzichtet werden. Durch diesen Wegfall der Ölschmierung kann somit kein Öl durch die Umlenkvorrichtung 1 selbst an dem Aufstellungsort der Umlenkvorrichtung 1 in die Umwelt gelangen.

Die Umlenkvorrichtung 1 ist eine Vorrichtung, welch dazu ausgebildet ist längliches Stückgut 2 eingangsseitig im Quertransport aufzunehmen und das längliche Stückgut 2 ausgangsseitig im Längstransport abzugeben.

Als längliches Stückgut 2 ist jede Art von Stückgut zu verstehen, welches ein längliches Ausmaß aufweist. Dabei ist eine erste Seite des länglichen Stückgutes 2, welche sich entlang der Längstransportrichtung 21 erstreckt, länger als eine zweite quer zur Längstransportrichtung 21 angeordnete Seite des länglichen Stückgutes 2.

Bevorzugt ist das längliche Stückgut 2 aus Holz.

Alternativ kann das längliche Stückgut 2 auch aus einem Polymer und/oder einem Metall sein.

Bevorzugt umfasst das längliche Stückgut 2 Bretter, Latten, Leisten und/oder Balken.

Besonders bevorzugt umfasst das längliche Stückgut 2 Holzbretter, Holzlatten, Holzleisten, Holzbalken und/oder Rundhölzer.

Als Quertransport ist bevorzugt ein Transport des länglichen Stückgutes 2 in die Richtung orthogonal zur Längstransportrichtung 21 des länglichen Stückgutes 2 zu verstehen.

Als Längstransport ist bevorzugt ein Transport des länglichen Stückgutes 2 in die Richtung der Längserstreckung des länglichen Stückgutes 2 zu verstehen.

Die Umlenkvorrichtung 1 kann auch als Fördervorrichtung bezeichnet werden. Bevorzugt ist die Richtung, in welche das längliche Stückgut 2 im Längstransport abgegeben bzw. transportiert wird, die Längstransportrichtung 21.

Bevorzugt ist die Umlenkvorrichtung 1 zur Änderung der Förderrichtung des längliches Stückgutes 2 ausgebildet. Besonders bevorzugt ist die Förderrichtung die Richtung in die das längliche Stückgut 2 gefördert bzw. transportiert wird.

Bevorzugt kann vorgesehen sein, dass sich die Förderrichtung der Umlenkvorrichtung 1 eingangsseitig und ausgangsseitig unterscheidet.

Bevorzugt ist die Förderrichtung der Umlenkvorrichtung 1 eingangsseitig orthogonal zur Längserstreckung der Umlenkvorrichtung 1.

Besonders bevorzugt ist die Förderrichtung der Umlenkvorrichtung 1 eingangsseitig orthogonal zur Längserstreckung des länglichen Stückgutes 2.

Bevorzugt ist die Förderrichtung der Umlenkvorrichtung 1 ausgangsseitig in die Längstransportrichtung 21 der Umlenkvorrichtung 1.

Es ist vorgesehen, dass die Umlenkvorrichtung 1 einen Aufnahmebereich 3 aufweist. Der Aufnahmebereich 3 ist bevorzugt zur Aufnahme des länglichen Stückgutes 2 ausgebildet. Bevorzugt wird das längliche Stückgut 2 in den Aufnahmebereich 3 aus dem Quertransport von einem Quertransporter übergeben. Nachdem einem Fachmann der Begriff eines Quertransporters bekannt ist, wird an dieser Stelle auf die Aufzählung und auf die Beschreibung unterschiedlicher Quertransporter verzichtet.

Insbesondere wird das längliche Stückgut 2 eingangsseitig von einem Zubringer im Quertransport aufgenommen.

Insbesondere kann der Zubringer ein Quertransporter sein.

Bevorzugt wird für die Übergabe des länglichen Stückgutes 2 aus dem Quertransport in den Längstransport das Eigengewicht des länglichen Stückgutes 2 und die Erdbeschleunigung genutzt.

Besonders bevorzugt ist der Aufnahmebereich 3 im Betriebszustand der Umlenkvorrichtung 1 nach oben offen ausgebildet. Bevorzugt ist der Aufnahmebereich 3 der Umlenkvorrichtung 1 eine Öffnung, welche Öffnung im Betriebszustand der Umlenkvorrichtung 1 dem Untergrund abgewandt angeordnet ist.

Bei der Bezeichnung des Aufnahmebereiches 3 als Aufnahmeraum ist bevorzugt vorgesehen, dass der Aufnahmeraum kein abgeschlossener Raum ist. Bevorzugt ist der Aufnahmeraum im Betriebszustand der Umlenkvorrichtung 1 nach oben offen ausgebildet.

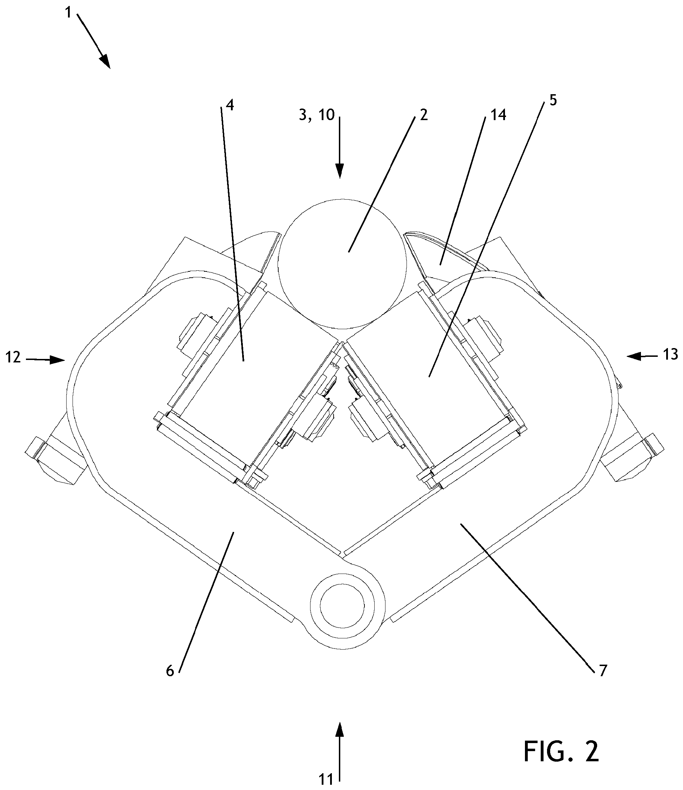

In Fig 2. ist beispielhaft die bevorzugte Ausführungsform der Umlenkvorrichtung 1 mit einem länglichen Stückgut 2 dargestellt, welche in dem Aufnahmebereich 3 der Umlenkvorrichtung 1 aufgenommen wurde.

Bevorzugt weist die Umlenkvorrichtung 1 einen ersten und einen zweiten Endbereich 8, 9 auf, wobei an dem ersten Endbereich 8 der Umlenkvorrichtung 1 das längliche Stückgut 2 im Längstransport, insbesondere an eine Förderanlage zum Längstransport von länglichem Stückgut 2, übergeben wird, wobei der zweite Endbereich 9 der Umlenkvorrichtung 1 gegenüberliegend und beabstandet zu dem ersten Endbereich 8 der Umlenkvorrichtung 1 angeordnet ist. In Fig. 1 ist beispielhaft die bevorzugte Ausführungsform der Umlenkvorrichtung 1 mit dem ersten und dem zweiten Endbereich 8, 9 dargestellt.

Bevorzugt weist die Umlenkvorrichtung 1 eine Oberseite 10 auf, an welcher Oberseite 10 das längliche Stückgut 2 transportiert wird.

Bevorzugt weist die Umlenkvorrichtung 1 eine zu der Oberseite 10 der Umlenkvorrichtung 1 gegenüberliegend und beabstandet angeordnete Unterseite 11 auf.

Bevorzugt weist die Umlenkvorrichtung 1 eine erste und eine zweite Querseite 12, 13 auf, wobei an der ersten und/oder an der zweiten Querseite 12, 13 das längliche Stückgut 2 eingangsseitig im Quertransport aufgenommen werden kann.

In Fig. 2 ist beispielhaft die bevorzugte Ausführungsform der Umlenkvorrichtung 1 mit der Oberseite 10, der Unterseite 11 und der ersten und der zweiten Querseite 12, 13 dargestellt.

Es ist vorgesehen, dass die zumindest zwei bandförmigen Förderer 4, 5 in einem Betriebszustand der Umlenkvorrichtung 1 den Aufnahmebereich 3 aufspannen.

Dabei kann insbesondere vorgesehen sein, dass die Förderrichtung der bandförmigen Förderer 4, 5 in Längstransportrichtung 21 angeordnet ist.

Als bandförmige Förderer können insbesondere Förderer angesehen werden, welche in Längstransportrichtung 21 bewegliche Förderflächen umfassen.

Insbesondere kann vorgesehen sein, dass auf den in Längstransportrichtung 21 beweglichen Förderflächen das längliche Stückgut 2 transportiert wird.

Bevorzugt können die bandförmigen Förderer 4, 5 mechanische Förderer sein.

Besonders bevorzugt können die bandförmigen Förderer 4, 5 Bandförderer und/oder Kettenförderer sein.

Insbesondere können die bandförmigen Förderer 4, 5 Förderbänder zum Transport des länglichen Stückgutes 2 umfassen.

Insbesondere können die bandförmigen Förderer 4, 5 Förderketten zum Transport des länglichen Stückgutes 2 umfassen. Bevorzugt wird das längliche Stückgut 2 mit den zumindest zwei bandförmigen Förderern 4, 5 transportiert bzw. befördert.

Bevorzugt weisen die zumindest zwei bandförmigen Förderer 4, 5 dieselbe Förderbreite auf.

Alternativ kann vorgesehen sein, dass die zumindest zwei bandförmigen Förderer 4, 5 unterschiedliche Förderbreiten aufweisen.

Bevorzugt umfassen die zumindest zwei bandförmigen Förderer 4, 5 wenigstens eine Antriebseinheit. Bevorzugt umfassen die zumindest zwei bandförmigen Förderer 4, 5 jeweils wenigstens eine Antriebseinheit. Insbesondere ist vorgesehen, dass die zumindest zwei bandförmigen Förderer 4, 5 durch die wenigstens eine Antriebseinheit angetrieben werden.

Bevorzugt kann die wenigstens eine Antriebseinheit zumindest einen Motor, insbesondere einen Elektromotor, zum Antreiben der zumindest zwei bandförmigen Förderer 4, 5 umfassen.

Bevorzugt kann die wenigstens eine Antriebseinheit zumindest einen Getriebemotor zum Antreiben der zumindest zwei bandförmigen Förderer 4, 5 umfassen.

Besonders bevorzugt kann vorgesehen sein, dass sich die bandförmigen Förderer 4,5 im Wesentlichen mit der gleichen Geschwindigkeit bewegen.

Bei der Ausbildung der zumindest zwei bandförmigen Förderer 4,5 als Bandförderer kann vorgesehen sein, dass die wenigstens eine Antriebseinheit der zumindest zwei bandförmigen Förderer 4, 5 eine Rolleneinheit zum Führen der zumindest zwei bandförmigen Förderer 4, 5 entlang der Längstransportrichtung 21 umfasst.

Bevorzugt kann vorgesehen sein, dass die Umlenkvorrichtung 1 genau zwei in einem Winkel zueinander angeordnete bandförmigen Förderer 4, 5 umfasst. Besonders bevorzugt kann vorgesehen sein, dass die Umlenkvorrichtung 1 genau zwei in einem vordefinierten Winkel zueinander angeordnete bandförmigen Förderer 4, 5 umfasst. In den Fig. 1 bis 3 ist beispielhaft die bevorzugte Ausführungsform der Umlenkvorrichtung 1 mit zwei bandförmigen Förderern 4, 5 darstellt.

Der Betriebszustand der Umlenkvorrichtung 1 ist bevorzugt ein Zustand in dem längliches Stückgut 2 mittels der Umlenkvorrichtung 1 eingangsseitig im Quertransport aufgenommen und ausgangsseitig im Längstransport abgegeben wird.

Bevorzugt ist der Aufnahmebereich 3 durch die zumindest zwei bandförmigen Förderer 4, 5 ausgebildet.

Besonders bevorzugt kann vorgesehen sein, dass die zumindest zwei bandförmigen Förderer 4, 5 wenigstens eine Dämpfung umfassen. Bevorzugt ist die wenigstens eine Dämpfung dazu ausgebildet einen Aufprall des länglichen Stückgutes 2 auf die zumindest zwei bandförmigen Förderer 4, 5 zu dämpfen. Dadurch ergibt sich der Vorteil, dass das längliche Stückgut 2 schneller in Längstransportrichtung 21 beschleunigt werden kann.

Insbesondere kann die wenigstens eine Dämpfung durch die zumindest zwei bandförmigen Förderer 4, 5 selbst ausgebildet sein.

Insbesondere kann die wenigstens eine Dämpfung in der Rolleneinheit der zumindest zwei bandförmigen Förderer 4, 5 ausgebildet sein. Dabei kann bevorzugt vorgesehen sein, dass die Rolleneinheit wenigstens einen hydraulischen Dämpfer und/oder wenigstens einen Reibungsdämpfer umfasst.

Bevorzugt kann vorgesehen sein, dass an der ersten und/oder zweiten Querseite 12, 13 der Umlenkvorrichtung 1 zumindest ein Förderrad 14 zur Beschleunigung des länglichen Stückgutes 2 entlang der Förderrichtung angeordnet ist.

Besonders bevorzugt ist die erste und/oder die zweite Querseite 12, 13 der Umlenkvorrichtung 1 dazu ausgebildet das längliche Stückgut 2 eingangsseitig im Quertransport anzunehmen.

Bevorzugt umfasst die Umlenkvorrichtung 1 entlang der Längstransportrichtung 21 mehrere Förderräder 14 zur Beschleunigung des länglichen Stückgutes 2 entlang der Förderrichtung.

Bevorzugt kann das zumindest eine Förderrad 14 dazu ausgebildet sein das längliche Stückgut 2 entlang der Förderrichtung zu beschleunigen.

Besonders bevorzugt kann das zumindest eine Förderrad 14 schraubenförmig und/oder konisch geformt ausgebildet sein.

Besonders bevorzugt kann das zumindest eine Förderrad 14 dazu ausgebildet sein das längliche Stückgut 2 bereits vor Kontakt mit den zumindest zwei bandförmigen Förderern 4, 5 entlang der Förderrichtung zu beschleunigen.

Nachdem der Aufnahmebereich 3 der Umlenkvorrichtung 1 das längliche Stückgut 2 eingangsseitig im Quertransport aufnimmt und bei dem Quertransport des länglichen Stückgutes 2 im Wesentlichen keine Längsbeschleunigung des länglichen Stückgutes 2 vorliegt, ist unter der Beschleunigung des länglichen Stückgutes 2 mittels des zumindest einen Förderrades 14 eine Beschleunigung des länglichen Stückgutes 2 in die Längstransportrichtung 21 bei der Übergabe des länglichen Stückgutes 2 aus dem Quertransport in den Längstransport zu verstehen.

Erfindungsgemäß ist vorgesehen, dass an der ersten und/oder zweiten Querseite 12, 13 der Umlenkvorrichtung 1 zumindest ein Förderrad 14 zur Beschleunigung des länglichen Stückgutes 2 in die Längstransportrichtung 21 angeordnet ist.

Bevorzugt wird das längliche Stückgut 2 bei der eingangsseitigen Aufnahme des länglichen Stückgutes 2 mittels des zumindest einen Förderrades 14 in Längstransportrichtung 21 beschleunigt. Bevorzugt wird das längliche Stückgut 2 in Längstransportrichtung 21 beschleunigt bevor das längliche Stückgut 2 mit wenigstens einem der zumindest zwei bandförmigen Förderer 4, 5 in Kontakt gelangt.

Bevorzugt kann vorgesehen sein, dass durch die zumindest zwei bandförmigen Förderer 4, 5 ein V-förmiges Profil des Aufnahmebereiches 3 aufgespannt ist. Dadurch ergibt sich der Vorteil, dass eine besonders schlupfminimierte Längsbeschleunigung des länglichen Stückgutes 2 bei der Übergabe des länglichen Stückgutes 2 aus dem Quertransport in den Längstransport erreicht wird. Weiters ergibt sich dadurch auch der Vorteil, dass es speziell bei kürzeren länglichen Stückgütern 2 zu keiner Pendelbewegung bei der Aufnahme des länglichen Stückgutes 2 in den Aufnahmebereich 3 kommt.

Bevorzugt wird das V-förmige Profil des Aufnahmebereiches 3 durch die zumindest zwei bandförmigen Förderer 4, 5 ausgebildet.

Besonders bevorzugt kann das V-förmige Profil des Aufnahmebereiches 3 in dem Betriebszustand der Umlenkvorrichtung 1 nach oben offen sein.

Bevorzugt kann vorgesehen sein, dass der Aufnahmebereich 3 lediglich durch die zumindest zwei bandförmigen Förderer 4, 5 begrenzt ist. Dadurch ergibt sich der Vorteil, dass das längliche Stückgut 2 besonders gut durch den Aufnahmebereich 3 aufgenommen werden kann, wobei das längliche Stückgut 2 besonders schnell mit einer größeren Fläche der zumindest zwei bandförmigen Förderer 4, 5 in Kontakt gelangen kann.

Besonders bevorzugt kann vorgesehen sein, dass der Aufnahmebereich 3 durch die zumindest zwei bandförmigen Förderer 4, 5 im Betriebszustand der Umlenkvorrichtung 1 nach unten begrenzt ist.

Besonders bevorzugt kann vorgesehen sein, dass der Aufnahmebereich 3 ausschließlich durch die zumindest zwei bandförmigen Förderer 4, 5 begrenzt ist.

Bevorzugt kann vorgesehen sein, dass die zumindest zwei bandförmigen Förderer 4, 5 in einem Winkel von größer gleich 60 Grad, bevorzugt größer gleich 80 Grad, besonders bevorzugt größer gleich 100 Grad, zueinander angeordnet sind. Dadurch ergibt sich der Vorteil, dass das längliche Stückgut 2 besonders effizient von dem Aufnahmebereich 3 aufgenommen werden kann, wodurch eine besonders schnelle Zentrierung des länglichen Stückgutes 2 erreicht wird und wodurch eine schlupfminimierte Längsbeschleunigung erreicht wird.

Bevorzugt kann vorgesehen sein, dass die zumindest zwei bandförmigen Förderer 4, 5 in einem Winkel von kleiner gleich 180 Grad, bevorzugt kleiner gleich 160 Grad, besonders bevorzugt von kleiner gleich 140 Grad, zueinander angeordnet sind. Dadurch ergibt sich der Vorteil, dass das längliche Stückgut 2 besonders effizient von dem Aufnahmebereich 3 aufgenommen werden kann, wodurch eine besonders schnelle Zentrierung des länglichen Stückgutes 2 erreicht wird und wodurch eine schlupfminimierte Längsbeschleunigung erreicht wird.

Bevorzugt kann vorgesehen sein, dass die zumindest zwei bandförmigen Förderer 4, 5 in einem Winkel von im Wesentlichen 110 Grad zueinander angeordnet sind. Dadurch ergibt sich der Vorteil, dass das längliche Stückgut 2 besonders effizient von dem Aufnahmebereich 3 aufgenommen werden kann, wodurch eine besonders schnelle Zentrierung des länglichen Stückgutes 2 erreicht wird und wodurch eine besonders gute schlupfminimierte Längsbeschleunigung erreicht wird.

Insbesondere ist der Winkel unter welchem die zwei bandförmigen Förderer 4, 5 zueinander angeordnet sind, der Winkel, welcher auf einer Ebene senkrecht zur Längstransportrichtung 21 im Betriebszustand der Umlenkvorrichtung 1 durch eine erste Tangente auf einer ersten Oberfläche der zumindest zwei bandförmigen Förderer 4, 5 und einer zweiten Tangente auf einer zweiten Oberfläche der zumindest zwei bandförmigen Förderer 4,5 eingeschlossen wird.

Bevorzugt kann vorgesehen sein, dass die zumindest zwei bandförmigen Förderer 4, 5 in dem Betriebszustand der Umlenkvorrichtung 1 arretiert sind, wobei wenigstens ein bandförmiger Förderer der zumindest zwei bandförmigen Förderer 4, 5 in einem Wartungszustand der Umlenkvorrichtung 1 in eine Wartungsposition schwenkbar ist. Dadurch ergibt sich der Vorteil, dass Wartungsarbeiten an den zumindest zwei bandförmigen Förderern 4, 5 bzw. die Wartung der Umlenkvorrichtung 1 gegenüber derzeit bekannten Umlenkvorrichtungen 1 deutlich vereinfacht wird und schneller durchgeführt werden kann.

Bevorzugt kann vorgesehen sein, dass die Umlenkvorrichtung 1 wenigstens ein Gelenk umfasst.

Bevorzugt kann vorgesehen sein, dass wenigstens ein erster bandförmiger Förderer 4 der zumindest zwei bandförmigen Förderer 4, 5 an wenigstens einem ersten Befestigungsarm 6 befestigt ist. Dadurch ergibt sich der Vorteil, dass die Wartung sowie Wartungsarbeiten an den zumindest zwei bandförmigen Förderern 4, 5 bzw. die Wartung der Umlenkvorrichtung 1 gegenüber derzeit bekannten Umlenkvorrichtungen 1 deutlich vereinfacht wird.

Bevorzugt kann vorgesehen sein, dass wenigstens ein zweiter bandförmiger Förderer 5 der zumindest zwei bandförmigen Förderer 4, 5 an wenigstens einem zweiten Befestigungsarm 7 befestigt ist.

Bevorzugt kann vorgesehen sein, dass die zumindest zwei bandförmigen Förderer 4, 5 in dem Betriebszustand der Umlenkvorrichtung 1 arretiert sind, wobei der erste bandförmige Förderer 4 und/oder der zweite bandförmige Förderer 5 der zumindest zwei bandförmigen Förderer 4, 5 in dem Wartungszustand der Umlenkvorrichtung 1 in eine Wartungsposition schwenkbar ist.

Bevorzugt kann vorgesehen sein, dass der wenigstens eine erste Befestigungsarm 6 zum Ausschwenken in die Wartungsposition der Umlenkvorrichtung 1 gegenüber wenigstens einem zweiten bandförmigen Förderer 5 der zumindest zwei bandförmigen Förderer 4, 5 schwenkbar gelagert ist. Dadurch ergibt sich der Vorteil, dass die Wartung sowie Wartungsarbeiten an den zumindest zwei bandförmigen Förderern 4, 5 bzw. die Wartung der Umlenkvorrichtung 1 gegenüber derzeit bekannten Umlenkvorrichtungen 1 deutlich vereinfacht wird.

Besonders bevorzugt kann der zumindest eine erste Befestigungsarm 6 gegenüber dem zumindest einen zweiten Befestigungsarm 7, insbesondere mittels des wenigstens einem Gelenks, schwenkbar sein.

Besonders bevorzugt kann vorgesehen sein, dass die Umlenkvorrichtung 1 zumindest eine Hydraulikeinheit 15 zum Schwenken des wenigstens einen ersten Befestigungsarms 6 in die Wartungsposition der Umlenkvorrichtung 1 umfasst.

Insbesondere kann die zumindest eine Hydraulikeinheit 15 an dem ersten Endbereich 8 und/oder an dem zweiten Endbereich 9 der Umlenkvorrichtung 1 angeordnet sein.

Insbesondere kann die zumindest eine Hydraulikeinheit 15 an der wenigstens einen Antriebseinheit der zumindest zwei bandförmigen Förderer 4, 5 angeordnet sein.

Besonders bevorzugt kann vorgesehen sein, dass sich die zwei bandförmigen Förderer 4, 5 zumindest mittelbar gegenseitig abstützen. Fig. 2 zeigt eine bevorzugte Ausführungsform der Umlenkvorrichtung 1 in Frontansicht, wobei ersichtlich ist, dass sich die zwei bandförmigen Förderer 4, 5 zumindest mittelbar abstützen.

Bevorzugt kann vorgesehen sein, dass die zumindest zwei Befestigungsarme 6, 7, insbesondere an dem wenigstens einem Gelenk, um einen Winkel von kleiner als 100 Grad, bevorzugt um einen Winkel von kleiner als 80 Grad, besonders bevorzugt um einen Winkel von kleiner als 60 Grad, schwenkbar gelagert sind. Dadurch ergibt sich der Vorteil, dass die Teile der Umlenkvorrichtung 1 besser zugänglich sind, wodurch Wartungsarbeiten an der Umlenkvorrichtung 1 erleichtert werden.

Bevorzugt kann vorgesehen sein, dass die zumindest zwei Befestigungsarme 6, 7, insbesondere an dem wenigstens einem Gelenk, um einen Winkel von größer als 10 Grad, bevorzugt um einen Winkel von größer als 20 Grad, besonders bevorzugt um einen Winkel von größer als 30 Grad, schwenkbar gelagert sind. Dadurch ergibt sich der Vorteil, dass die Teile der Umlenkvorrichtung 1 besser zugänglich sind, wodurch Wartungsarbeiten an der Umlenkvorrichtung 1 erleichtert werden.

Bevorzugt kann vorgesehen sein, dass die zumindest zwei Befestigungsarme 6, 7, insbesondere an dem wenigstens einem Gelenk, um einen Winkel von im Wesentlichen 35 Grad schwenkbar gelagert sind. Dadurch ergibt sich der Vorteil, dass die Teile der Umlenkvorrichtung 1 besonders gut zugänglich sind, wodurch Wartungsarbeiten an der Umlenkvorrichtung 1 besonders erleichtert werden.

Bevorzugt kann vorgesehen sein, dass das wenigstens eine Gelenk eine Achse umfasst, welche parallel zur Förderrichtung angeordnet ist.

Bevorzugt kann vorgesehen sein, dass die Umlenkvorrichtung 1 Teil einer Sortieranlage ist.

Eine Sortieranlage ist eine Anlage, welche dazu vorgesehen ist verschiedene längliche Stückgüter 2 nach vorgegebenen Kriterien zu sortieren.

Bevorzugt wird dabei unsortiertes längliches Stückgut 2 von der Sortieranlage eingangsseitig aufgenommen und sortiert ausgangsseitig abgegeben.

Bevorzugt wird das längliche Stückgut 2 von der Sortieranlage eingangsseitig im Quertransport aufgenommen.

Bevorzugt wird das längliche Stückgut 2 von der Sortieranlage im Längstransport sortiert.

In den Fig. 1 bis 6 sind beispielhaft zumindest Teile der Sortieranlage dargestellt, wobei die Sortieranlage in den Fig. 1 bis 6 als gesamtes nicht dargestellt ist.

Bevorzugt wird das mittels einer Umlenkvorrichtung 1 umgelenkte längliche Stückgut 2 ausgangsseitig an eine Förderanlage der Sortieranlage abgegeben.

Dabei kann die Sortieranlage bevorzugt eine Förderanlage 16 zum Längstransport von länglichen Stückgut 2 umfassen, um unsortiertes längliches Stückgut 2 in Längstransportrichtung 21 zu transportieren.

Bevorzugt kann das längliche Stückgut 2 von der Umlenkvorrichtung 1 ausgangsseitig an die Förderanlage 16 abgegeben werden.

Weiters kann die Sortieranlage bevorzugt zumindest eine Lagereinheit 31 umfassen, wobei die sortierten Stückgüter bevorzugt in die zumindest eine Lagereinheit 31 abgelegt sind.

Insbesondere kann vorgesehen sein, dass die sortierten Stückgüter in mehrere Lagereinheiten 31 abgelegt sind. Dabei kann bevorzugt vorgesehen sein, dass sich die Lagereinheiten 31 in der Längserstreckung unterscheiden.

Insbesondere kann vorgesehen sein, dass die Lagereinheit 31 derart ausgebildet sein, dass die Länge des länglichen Stückgutes 2 der Länge der zumindest einen Lagereinheit 31 entspricht.

Bevorzugt kann die Lagereinheit 31 in Längstransportrichtung 7 neben der Förderanlage 1 angeordnet sein.

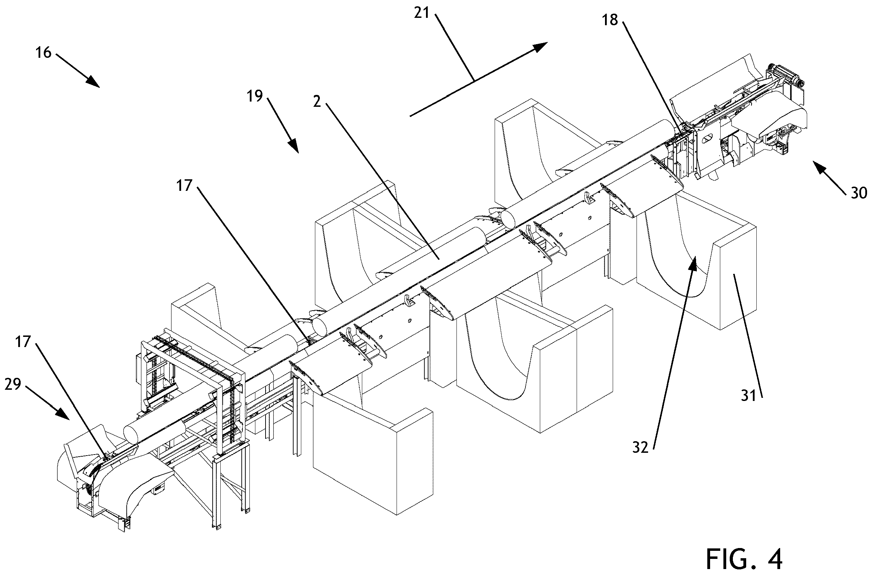

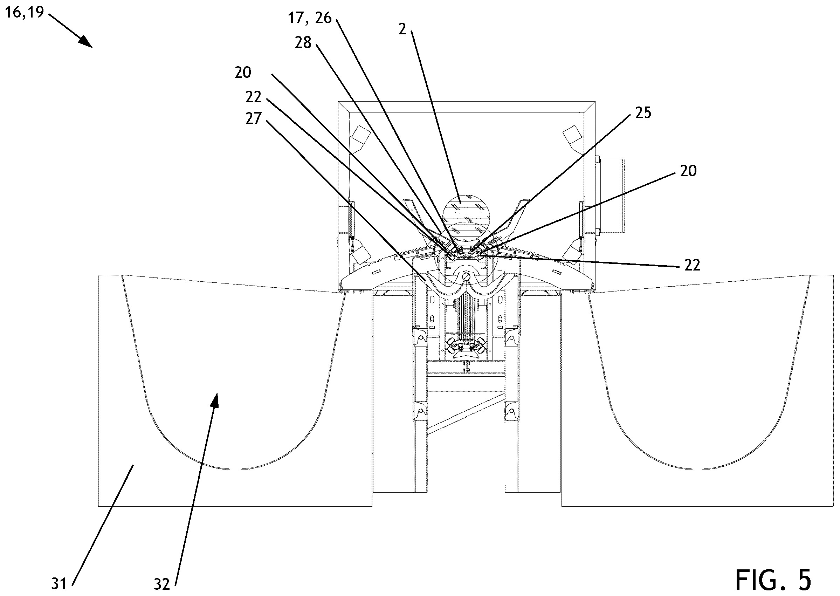

Besonders bevorzugt kann die zumindest eine Lagereinheit 31 eine Stückgutaufnahmeöffnung 32 aufweisen. Insbesondere kann vorgesehen sein, dass ein Endbereich des länglichen Stückgutes 2 in der Stückgutaufnahmeöffnung 32 angeordnet ist. In den Fig. 4 und Fig. 5 ist in der bevorzugten Ausführungsform der Förderanlage 1 die Lagereinheit 31 und die Stückgutaufnahmeeinheit 31 der Sortieranlage ersichtlich.

Es kann bevorzugt vorgesehen sein, dass die Umlenkvorrichtung 1 ausgangsseitig das längliche Stückgut 2 an eine Förderanlage 16 abgibt, dass die Förderanlage 16 zum Längstransport von länglichem Stückgut 2 eine Vielzahl beweglich gelagerter Mitnehmer 17 umfasst, dass die Vielzahl der Mitnehmer 17 mittels wenigstens eines Zugseiles 18 zu einem umlaufenden Zugband verbunden sind, dass die Förderanlage 16 in einem Förderbereich 19 zumindest eine Führungsschiene 20 in Längstransportrichtung 21 umfasst, dass jeder Mitnehmer 17 zumindest eine Laufrolle 22 zur Führung des Mitnehmers 17 entlang der zumindest einen Führungsschiene 20 umfasst, und dass jeder Mitnehmer 17 in dem Förderbereich 19 an der zumindest einen Führungsschiene 20 kippsicher gelagert ist.

Dadurch ergibt sich der Vorteil, dass die Förderanlage 16 umweltfreundlich betrieben werden kann, da für die Längsförderung von länglichem Stückgut 2 keine Ölschmierung benötigt wird. Dadurch kann auf die Verwendung einer Kette als Antriebsstrang für die Vielzahl der Mitnehmer 17 verzichtet werden, wobei durch die Kombination des wenigstens eines Zugseils 18 mit der wenigstens einen Laufrolle 22 des Mitnehmers 17 gänzlich auf eine Ölschmierung an freiliegenden Teilen der Förderanlage 16 verzichtet werden kann. Dadurch kann auch kein Öl an dem Aufstellungsort der Förderanlage 16 in die Umwelt gelangen. Des Weiteren wird durch die Kombination des wenigstens einen Zugseils 18 mit der wenigstens einen Laufrolle 22 des Mitnehmers 17 auch die Lärmbelastung der Förderanlage 16 bei einem Förderprozess im Gegensatz zu einer Förderanlage 16 mit kettengeführtem Mitnehmer 17 deutlich reduziert, wodurch die Lärmbelastung für Anrainer sowie für Arbeiter, welche in der Nähe einer derartigen Sortieranlage wohnen bzw. arbeiten, deutlich reduziert wird. Durch die Führung der Vielzahl der Mitnehmer 17 entlang der wenigstens einen Führungsschiene 20 mit Hilfe der wenigstens einer Laufrolle 22 wird die Reibung des Mitnehmers 17 an der wenigstens einen Führungsschiene 20 im Vergleich zu derzeit bekannten Förderanlagen 16 deutlich reduziert, wodurch sich die Lebenszeit der Förderanlage 16 gegenüber derzeit bekannten Förderanlagen 16 verlängert, sowie die Wartungsintervalle vergrößert werden. Durch die verminderte Reibung an bewegten Teilen der Förderanlage 16 wird folglich auch der Energieverbrauch der Förderanlage 16 reduziert, wodurch längliches Stückgut 2 umweltfreundlicher als mit konventionellen Förderanlagen 16 gefördert werden kann. Durch die Kombination des wenigstens einen Zugseils 18 mit der wenigstens einen Laufrolle 22 ergibt sich noch ein weiterer Synergieeffekt, wodurch die Wartung sowie der Aufbau der Förderanlage 16 deutlich erleichtert wird. Dadurch können auch schon in einer Produktionsanlage Teile der Förderanlage 16 in eine Liefereinheit eingebaut werden, wodurch in vorteilhafterweise auch Teile der Förderanlage 16 gegenüber mit Kette betriebenen Förderanlagen 16 erleichtert ausgetauscht werden können. Durch die kippsichere Lagerung jedes Mitnehmers 17 in dem Förderbereich 19 an der zumindest einen Führungsschiene 20 wird ein effizienterer und sicherer Betrieb der Förderanlage 16 bei einer gleichzeitig hohen Förderkapazität erreicht.

Dabei hat sich gezeigt, dass die Sortieranlage besonders gut betrieben werden kann, wenn die Umlenkvorrichtung 1 mit der Förderanlage 16 kombiniert wird. Durch die Kombination der Förderanlage 16 mit der Umlenkvorrichtung 1 ergeben sich Synergieeffekte, wobei nach einem Umlenken des länglichen Stückgutes 2 aus dem Quertransport in den Längstransport das längliche Stückgut besonders genau und effizient an die Förderanlage 16 abgegeben werden kann. Dadurch kann das längliche Stückgut 2 besonders gut von der Förderanlage 16 aufgenommen werden, wobei eine schnelle und genaue Übergabe des länglichen Stückgutes 2 an die Mitnehmer 17 der Förderanlage 16 gewährleistet werden kann.

Grundsätzlich könnte die Förderanlage 16 auch mit einer anderen als hier beschriebenen Umlenkvorrichtung 1 betrieben werden.

Bevorzugt ist die Förderanlage 16 dazu ausgebildet das längliches Stückgut 2 effizient und umweltfreundlich im Längstransport zu fördern.

Die Fig. 4 bis 6 zeigen zumindest Teile einer bevorzugten Ausführungsform einer Förderanlage 16 zum Längstransport von länglichem Stückgut 2 mittels einer Vielzahl beweglich gelagerter Mitnehmer 17, wobei die Vielzahl der Mitnehmer 17 mittels wenigstens eines Zugseils 18 zu einem umlaufenden Zugband verbunden sind, wobei die Förderanlage 16 in einem Förderbereich 19 zumindest eine Führungsschiene 20 in Längstransportrichtung 21 umfasst, wobei jeder Mitnehmer 17 zumindest eine Laufrolle 22 zur Führung des Mitnehmers 17 entlang der zumindest einen Führungsschiene 20 umfasst, und dass jeder Mitnehmer 17 in dem Förderbereich 19 an der zumindest einen Führungsschiene 20 kippsicher gelagert ist.

Die Förderanlage 16 ist eine Vorrichtung, welche dazu ausgebildet ist längliches Stückgut 2 in Längstransportrichtung 21 zu transportieren.

Es ist vorgesehen, dass das längliche Stückgut 2 mittels einer Vielzahl beweglich gelagerter Mitnehmer 17 in Längstransportrichtung 21 transportiert wird.

Insbesondere ist die Längstransportrichtung 21, die Richtung entlang das längliche Stückgut 2 gefördert bzw. transportiert wird. Besonders bevorzugt kann die Längstransportrichtung 21 auch als Fördertransportrichtung bezeichnet werden.

Bevorzugt liegt das längliche Stückgut 2 in dem Förderbereich 19 auf zumindest zwei Mitnehmern 17 auf.

Bevorzugt weist wenigstens ein Teil der Vielzahl der beweglich gelagerten Mitnehmer 17 sechs Seiten auf, wobei eine Oberseite des Mitnehmers 17 mit einer Auflageeinheit für das wenigstens eine Holzstück verbunden ist, wobei eine Unterseite des Mitnehmers 17 gegenüberliegend und beabstandet zu der Oberseite des Mitnehmers 17 angeordnet ist, wobei eine Vorderseite des Mitnehmers 17 in der Längstransportrichtung 21 angeordnet ist, wobei eine Rückseite des Mitnehmers 17 gegenüberliegend und beabstandet zu der Vorderseite des Mitnehmers 17 angeordnet ist, wobei jeweils eine Schmalseite des Mitnehmers 17 orthogonal zur Längstransportrichtung 21 angeordnet ist.

Bevorzugt kann vorgesehen sein, dass an der Vorderseite des Mitnehmers 17 eine erste Stirnseite des Mitnehmers 17 angeordnet ist.

Bevorzugt kann vorgesehen sein, dass an der Rückseite des Mitnehmers 17 eine zweite Stirnseite des Mitnehmers 17 angeordnet ist.

Die beweglich gelagerten Mitnehmer 17 sind dabei mittels wenigstens eines Zugseils 18 zu einem umlaufenden Zugband verbunden. Es ist vorgesehen, dass das umlaufende Zugband durch die mit dem wenigstens einen Zugseil 18 verbundenen Mitnehmer 17 ausgebildet wird.

Bevorzugt ist das umlaufende Zugband geschlossen.

Besonders bevorzugt kann vorgesehen sein, dass wenigstens zwei Mitnehmer 17 der Vielzahl der Mitnehmer 17 mittels wenigstens eines Zugseils 18 miteinander verbunden sind. Besonders bevorzugt kann vorgesehen sein, dass wenigstens zwei Mitnehmer 17 der Vielzahl der Mitnehmer 17 mittels wenigstens zwei Zugseilen 18 miteinander verbunden sind. Besonders bevorzugt kann vorgesehen sein, dass wenigstens zwei Mitnehmer 17 mittels lediglich zwei Zugseilen 18 miteinander verbunden sind.

Besonders bevorzugt kann vorgesehen sein, dass jeder Mitnehmer 17 mit wenigstens einem Zugseil 18 verbunden ist.

Insbesondere kann vorgesehen sein, dass jeder Mitnehmer 17 mit zumindest zwei anderen Mitnehmern 17 verbunden ist.

Bevorzugt kann vorgesehen sein, dass der Abstand zwischen zwei Mitnehmer 17 durch die Länge des wenigstens einem Zugseils 18 zwischen zwei Mitnehmern 17 bestimmt ist.

Besonders bevorzugt kann der Abstand zwischen wenigstens einem Teil der Vielzahl der beweglich gelagerten Mitnehmern 17 gleich groß sein. Insbesondere kann der Abstand zwischen allen beweglich gelagerten Mitnehmern 17 gleich groß sein. Dadurch ergibt sich der Vorteil, dass der Abstand zwischen den beweglich gelagerten Mitnehmern 17 bei jeder Förderanlage 16 individuell angepasst werden kann, wodurch die Längen der zu transportierenden länglichen Stückgüter 2 an verschiedenen Förderanlagen 16 individuell berücksichtigt werden können.

Bevorzugt kann vorgesehen sein, dass im Betriebszustand der Förderanlage 16 das wenigstens eine Zugseil 18 im Förderbereich 19 unter Zug steht und/oder gespannt ist.

Besonders bevorzugt kann das wenigstens eine Zugseil 18 mittels eines Kreuzschlags des Seiles ausgebildet sein. Dabei kann der Kreuzschlag des Seiles auch als Gegenschlag bezeichnet werden.

Alternativ kann das wenigstens eine Zugseil 18 mittels eines Gleichschlags des Seiles ausgebildet sein.

Besonders bevorzugt kann vorgesehen sein, dass im Betriebszustand der Förderanlage 16 lediglich im Förderbereich 19 das wenigstens eine Zugseil 18 unter Zug steht und/oder gespannt ist.

Insbesondere kann vorgesehen sein, dass das umlaufende Zugband einen Rückführbereich umfasst, welcher gegenüberliegend und beabstandet zu dem Förderbereich 19 angeordnet ist.

Besonders bevorzugt kann der Rückführbereich im Betriebszustand der Förderanlage 16 unterhalb des Förderbereiches 19 angeordnet sein.

Bevorzugt kann vorgesehen sein, dass im Betriebszustand der Förderanlage 16 das wenigstens eine Zugseil 18 im Rückführbereich unter Zug steht und/oder gespannt ist.

Bevorzugt kann vorgesehen sein, dass die Vielzahl der beweglich gelagerten Mitnehmer 17 in dem Rückführbereich entgegen der Längstransportrichtung 21 geführt wird.

Insbesondere kann vorgesehen sein, dass die Förderanlage 16 eine Längserstreckung in Längstransportrichtung 21 aufweist, wobei zwei
Transportrichtungsänderungsbereiche 29, 30 die Förderanlage 16 in deren Längserstreckung begrenzen.

Insbesondere kann vorgesehen sein, dass ein erster Transportrichtungsänderungsbereich 29 der Förderanlage 16 an einem ersten Endbereich der Förderanlage 16 und ein zweiter Transportrichtungsänderungsbereich 30 der Förderanlage 16 an einem zweiten Endbereich der Förderanlage 16 angeordnet ist, welche gegenüberliegend zu dem ersten Endbereich der Förderanlage 16 angeordnet ist. Bevorzugt ist die Förderanlage 16 durch den ersten Transportrichtungsänderungsbereich 29 und/oder den zweiten Transportrichtungsänderungsbereich 30 in deren länglichen Erstreckung begrenzt. In Fig. 1 ist der erste Transportrichtungsänderungsbereich 29 an dem ersten Endbereich der Förderanlage 16 und der zweite Transportrichtungsänderungsbereich 30 an dem zweiten Endbereich der Förderanlage 16 ersichtlich.

Bevorzugt umfassen der erste Transportrichtungsänderungsbereich 29 und der zweite Transportrichtungsänderungsbereich 30 eine erste und eine zweite Richtungsänderungsvorrichtung zum Ändern der Transportrichtung der Vielzahl der beweglich gelagerten Mitnehmer 17 an dem wenigstens einem Zugseil 18 von dem Förderbereich 19 in den Rückführbereich. Bei Betrachtung eines einzelnen Mitnehmers 17 der Vielzahl der beweglich gelagerten Mitnehmer 17 wird der Mitnehmer 17 derart entlang des umlaufenden Zugbandes geführt, dass der Mitnehmer 17 bevorzugt an dem ersten Endbereich der Förderanlage 16 nach der ersten Richtungsänderungsvorrichtung 16 in Längstransportrichtung 21 mit einem länglichen Stückgut 2 zumindest mittelbar in Kontakt gelangt. Nachfolgend wird bevorzugt das längliche Stückgut 2 entlang der zumindest einen Führungsschiene 20 in dem Förderbereich 19 in Längstransportrichtung 21 transportiert. Bevorzugt kann vorgesehen sein, dass das längliche Stückgut 2 bei dem Transport in dem Förderbereich 19 der Förderanlage 16 von dem Mitnehmer 17 abgeworfen wird. Bevorzugt wird nach dem Transport des länglichen Stückgutes 2 der Mitnehmer 17 bei dem zweiten Transportrichtungsänderungsbereich 30 an dem zweiten Endbereich der Förderanlage 16 mittels der zweiten Richtungsänderungsvorrichtung in den Rückführbereich geführt. Nachfolgend wird der Mitnehmer 17 bevorzugt entgegen der Förderrichtung zurückgeführt. Dadurch kann bevorzugt vorgesehen werden, dass der Mitnehmer 17 wieder zum Fördern eines länglichen Stückgutes 2 verwendet werden kann, wenn der Mitnehmer 17 durch die erste Richtungsänderungsvorrichtung in den Förderbereich 19 geführt wird.

Bevorzugt kann vorgesehen sein, dass die erste und/oder die zweite Richtungsänderungsvorrichtung zum Antreiben der Förderanlage 16 ausgebildet ist. Insbesondere kann die erste und/oder die zweite Richtungsänderungsvorrichtung dazu ausgebildet sein das umlaufende Zugband anzutreiben. Bevorzugt kann die erste und/oder die zweite Richtungsänderungsvorrichtung einen Motor zum Antreiben der Förderanlage 16 umfassen.

Insbesondere kann der Förderbereich 19 zwischen dem ersten Transportrichtungsänderungsbereich 29 und dem zweiten Transportrichtungsänderungsbereich 30 angeordnet sein. Bevorzugt kann das längliche Stückgut 2 in dem Förderbereich 19 der Förderanlage 16 transportiert werden. Bevorzugt kann die Vielzahl der Mitnehmer 17 in dem Förderbereich 19 in Längstransportrichtung 21 transportiert werden.

Insbesondere kann der Rückführbereich zwischen dem ersten Transportrichtungsänderungsbereich 29 und dem zweiten Transportrichtungsänderungsbereich 30 angeordnet sein. Bevorzugt kann die Vielzahl der Mitnehmer 17 in dem Rückführbereich entgegen der Längstransportrichtung 21 transportiert werden.

Bevorzugt kann an dem ersten Endbereich der Förderanlage 16 das längliche Stückgut 2 auf wenigstens zwei beweglich gelagerte Mitnehmer 17 aufgelegt und mittels der wenigstens zwei beweglich gelagerten Mitnehmer 17 zu dem zweiten Endbereich der Förderanlage 16 transportiert werden. Besonders bevorzugt kann das längliche Stückgut 2 auf die wenigstens zwei beweglich gelagerten Mitnehmer 17 mit Hilfe einer Umlenkvorrichtung 1 einer Sortieranlage aufgelegt werden. Das Auflegen des länglichen Stückgutes 2 auf die wenigstens zwei beweglich gelagerten Mitnehmer 17 kann auch bevorzugt als ein Übergeben des länglichen Stückgutes 2 von der Umlenkvorrichtung 1 der Sortieranlage an die Förderanlage 16 verstanden werden.

Bevorzugt umfasst das umlaufende Zugband den Förderbereich 19, den Rückführbereich sowie den ersten Transportrichtungsänderungsbereich 29 und den zweiten Transportrichtungsänderungsbereich 30.

Es kann vorgesehen sein, dass die Förderanlage 16 in dem Förderbereich 19 zumindest eine Führungsschiene 20 in Längstransportrichtung 21 umfasst. Bevorzugt ist vorgesehen, dass die Förderanlage 16 in dem Förderbereich 19 zumindest zwei Führungsschienen 20 in Längstransportrichtung 21 umfasst. Insbesondere kann vorgesehen sein, dass die zumindest zwei Führungsschienen 20 der Förderanlage 16 gegenüberliegend und beabstandet zueinander angeordnet sind.

Bevorzugt kann vorgesehen sein, dass die Förderanlage 16 in dem Rückführbereich zumindest eine Führungsschiene 20 zur Führung des Mitnehmers 17 entgegen der Längstransportrichtung 21 umfasst.

Bevorzugt kann die zumindest eine Führungsschiene 20 aus Metall und/oder einer Metalllegierung und/oder aus einem Polymer, insbesondere einen Kunststoff, und/oder aus einem Verbundwerkstoff ausgebildet sein.

Bevorzugt kann die zumindest eine Führungsschiene 20 gerade ausgebildet sein.

Bevorzugt kann die zumindest eine Führungsschiene 20 zumindest teilweise in dem Förderbereich 19 angeordnet sein. Besonders bevorzugt erstreckt sich die zumindest eine Führungsschiene 20 entlang des Förderbereiches 19. Besonders bevorzugt erstreckt sich die zumindest eine Führungsschiene 20 von dem ersten Transportrichtungsänderungsbereich 29 bis zu dem zweiten Transportrichtungsänderungsbereich 30 entlang der Längstransportrichtung 21.

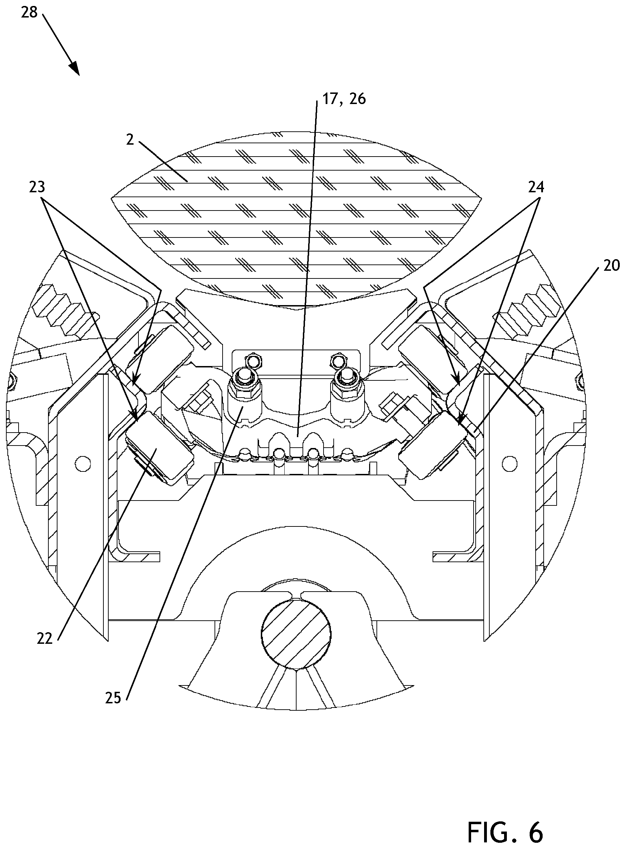

Es kann vorgesehen sein, dass jeder Mitnehmer 17 mit zumindest einer Laufrolle 22 entlang der zumindest einen Führungsschiene 20 geführt ist. Bevorzugt kann vorgesehen sein, dass an jeder Führungsschiene 20 zumindest eine Laufrolle 22 geführt ist. In Fig. 5 ist ein Schnitt senkrecht zur Längstransportrichtung 21 der in Fig. 4 dargestellten Förderanlage 16 ersichtlich, wobei die zumindest eine Laufrolle 22 und die zumindest eine Führungsschiene 20 ersichtlich ist. In Fig. 6 ist der in Fig. 5 mit dem Bezugszeichen 28 gekennzeichnete Bildausschnitt der bevorzugten Ausführungsform der Förderanlage 16 gezeigt.

Bevorzugt kann die wenigstens eine Laufrolle 22 aus einem Polymer, insbesondere aus einem Kunststoff und/oder einem Kautschuk, ausgebildet sein.

Alternativ kann die wenigstens eine Laufrolle 22 aus einem Metall, insbesondere aus einer Metalllegierung, ausgebildet sein.

Es ist vorgesehen, dass jeder Mitnehmer 17 in dem Förderbereich 19 an der zumindest einen Führungsschiene 20 kippsicher gelagert ist.

Insbesondere kann vorgesehen sein, dass im Betriebszustand der Förderanlage 16 oberhalb der zumindest einen Führungsschiene 20 im Förderbereich 19 eine Abdeckung angeordnet ist. Insbesondere kann vorgesehen sein, dass die Abdeckung Teil der zumindest einen Führungsschiene 20 ist. Bei der Verwendung von mehr als zumindest einer Führungsschiene 20 kann bevorzugt vorgesehen sein, dass oberhalb jeder Führungsschiene 20 im Förderbereich 19 eine Abdeckung angeordnet ist. Dadurch ergibt sich der Vorteil, dass die Führungsschiene 20 vor Verschmutzung geschützt werden kann.

Bevorzugt kann vorgesehen sein, dass die beweglich gelagerten Mitnehmer 17 voneinander beabstandet angeordnet sind. Insbesondere kann vorgesehen sein, dass die beweglich gelagerten Mitnehmer 17 mit einem vorgegebenen Abstand zueinander angeordnet sind. Insbesondere kann der Abstand der beweglich gelagerten Mitnehmer 17 zueinander von der zu transportierenden Länge des Stückguts 2 abhängen. Dadurch ergibt sich der Vorteil, dass kein durchgehendes Förderband zum Transport bzw. zum Fördern des länglichen Stückgutes 2 verwendet werden muss, wodurch die Reinigung der Förderanlage 16 sowie die Wartung der Mitnehmer 17 erleichtert wird.

Bevorzugt kann vorgesehen sein, dass die zumindest eine Führungsschiene 20 entlang der Längstransportrichtung 21 zumindest vier Laufflächen 23, 24 umfasst, wobei bei wenigstens einem Teil der beweglich gelagerten Mitnehmer 17 in dem Förderbereich 19 auf jeder Lauffläche 23, 24 zumindest eine Laufrolle 22 geführt ist. Dadurch ergibt sich der Vorteil, dass die Vielzahl der beweglich gelagerten Mitnehmer 17 besonders effizient und kippsicher entlang der zumindest einen Führungsschiene 20 geführt werden kann.

Bevorzugt kann vorgesehen sein, dass die zumindest vier Laufflächen 23, 24 durch die zumindest eine Führungsschiene 20 ausgebildet sind.

Besonders bevorzugt kann vorgesehen sein, dass die zumindest vier Laufflächen 23, 24 ein Teil der zumindest einen Führungsschiene 20 sind.

Alternativ kann vorgesehen sein, dass die zumindest vier Laufflächen 23, 24 mittelbar mit der zumindest einen Führungsschiene 20 verbunden sind.

Bevorzugt kann vorgesehen, dass zwei erste Laufflächen 23 der zumindest vier Laufflächen 23, 24 gegenüberliegend und beabstandet zu zwei zweiten Laufflächen 24 der zumindest vier Laufflächen 23, 24 angeordnet sind. Dadurch ergibt sich der Vorteil, dass die Vielzahl der beweglich gelagerten Mitnehmer 17 besonders effizient und kippsicher entlang der zumindest einen Führungsschiene 20 geführt werden können.

Besonders bevorzugt kann vorgesehen sein, dass die zwei ersten Laufflächen 23 der zumindest vier Laufflächen 23, 24 ein erstes Paar Laufflächen 23 ausbilden und dass die zwei zweiten Laufflächen 24 der zumindest vier Laufflächen 23, 24 ein zweites Paar Laufflächen 24 ausbilden.

Besonders bevorzugt kann vorgesehen sein, dass die zwei ersten Laufflächen 23 bzw. das erste Paar Laufflächen 23 im Wesentlichen achsensymmetrisch zu den zwei zweiten Laufflächen 24 bzw. zu dem zweiten Paar Laufflächen 24 angeordnet sind.

Besonders bevorzugt kann vorgesehen sein, dass die zwei ersten Laufflächen 23 bzw. das erste Paar Laufflächen 23 den zwei zweiten Laufflächen 24 bzw. dem zweiten Paar Laufflächen 24 gegenüberliegend angeordnet ist.

Bevorzugt kann vorgesehen sein, dass die zwei ersten Laufflächen 23 und/oder die zwei zweiten Laufflächen 24 der zumindest vier Laufflächen 23, 24 zueinander in einem Winkel an der zumindest einen Führungsschiene 20 angeordnet sind. Dadurch ergibt sich der Vorteil, dass der Mitnehmer 17 besonders kippsicher entlang der wenigstens einen Führungsschiene 20 in dem Förderbereich 19 geführt werden kann. In Fig. 6 ist beispielhaft die bevorzugte Ausführungsform der Förderanlage 16 mit zwei ersten Laufflächen 23 und zwei zweiten Laufflächen 24 dargestellt, wobei die zwei ersten Laufflächen 23 zueinander in einem ersten Winkel an einer ersten Führungsschiene angeordnet sind, die zwei zweiten Laufflächen 24 zueinander in einem zweiten Winkel an einer zweiten Führungsschiene angeordnet sind und die Winkelweite des ersten Winkels der Winkelweite des zweiten Winkels entspricht.

Bevorzugt kann vorgesehen sein, dass der Winkel zwischen den zwei ersten Laufflächen 23 dem Winkel zwischen den zwei zweiten Laufflächen 24 entspricht.

Bevorzugt kann vorgesehen sein, dass die zwei ersten Laufflächen 23 durch den Winkel zwischen den zwei ersten Laufflächen 23 einen ersten Keil ausbilden. Bevorzugt kann vorgesehen sein, dass die zwei zweiten Laufflächen 24 durch den Winkel zwischen den zwei zweiten Laufflächen 24 einen zweiten Keil ausbilden. Besonders bevorzugt kann vorgesehen sein, dass die Spitze des ersten Keiles gegenüberliegend und beabstandet zu der Spitze des zweiten Keiles angeordnet ist.

Besonders bevorzugt kann vorgesehen sein, dass die zwei ersten Laufflächen 23 bzw. das erste Paar Laufflächen 23 und/oder die zwei zweiten Laufflächen 24 bzw. das zweite Paar Laufflächen 24 in einem Winkel kleiner gleich 170 Grad zueinander an der zumindest einen Führungsschiene 20 in dem Förderbereich 19 angeordnet sind.

Besonders bevorzugt kann vorgesehen sein, dass die zwei ersten Laufflächen 23 bzw. das erste Paar Laufflächen 23 und/oder die zwei zweiten Laufflächen 24 bzw. das zweite Paar Laufflächen 24 im Wesentlichen im rechten Winkel zueinander an der zumindest einen Führungsschiene 20 angeordnet sind. Dadurch ergibt sich der Vorteil, dass der Mitnehmer 17 besonders kippsicher entlang der wenigstens einen Führungsschiene 20 in dem Förderbereich 19 geführt werden kann.

Bevorzugt kann vorgesehen sein, dass jeder Mitnehmer 17 zumindest eine Verbindungsvorrichtung 25 zur Befestigung des wenigstens einen Zugseils 18 aufweist. Besonders bevorzugt kann jeder Mitnehmer 17 über die zumindest eine Verbindungsvorrichtung 25 an dem wenigstens einen Zugseil 18 befestigt sein.

Dadurch ergibt sich der Vorteil, dass bei einem Wartungsfall eines Mitnehmers 17 der betreffende Mitnehmer 17 schnell und einfach ausgetauscht werden kann. In Fig. 6 ist eine Detailansicht der in Fig. 5 gezeigte Ausführungsform der Förderanlage 16 gezeigt, wobei ein Mitnehmer 17 mit zwei Verbindungsvorrichtungen 25 zur Befestigung von zwei Zugseilen 18 gezeigt ist.

Besonders bevorzugt umfasst die zumindest eine Verbindungsvorrichtung 25 eine Klemmverbindung zur Verbindung des wenigstens einen Zugseils 18 mit dem Mitnehmer 17.

Bevorzugt kann vorgesehen sein, dass die zumindest eine Verbindungsvorrichtung 25 bei wenigstens einem Teil der beweglich gelagerten Mitnehmer 17 an zumindest einer Stirnseite 26 des jeweiligen Mitnehmers 17 angeordnet ist. Dadurch ergibt sich der Vorteil, dass die Verbindungsvorrichtung 25 im Falle einer Wartungsarbeit besonders einfach zugänglich ist und somit Reparaturarbeiten an dem wenigstens einen Mitnehmer 17 besonders einfach durchgeführt werden können. Weiters kann dadurch auch ein Austausch von Einzelteilen des Mitnehmers 17 bzw. ein Austausch des Mitnehmers 17 selbst schnell und einfach durchgeführt werden.

Bevorzugt kann vorgesehen sein, dass wenigstens zwei der Vielzahl der beweglich gelagerten Mitnehmer 17 derart mit dem wenigstens einen Zugseil 18 verbunden sind, dass bei einem ersten Mitnehmer die Verbindungsvorrichtung 25 an einer ersten Stirnseite und bei einem zweiten Mitnehmer die Verbindungsvorrichtung 25 an einer von der ersten Stirnseite abgewandten zweiten Stirnseite angeordnet ist. Dadurch ergibt sich der Vorteil, dass ein besonders stabiler und kippsicherer Aufbau des Zugbandes erreicht wird, wodurch die Mitnehmer 17 bei der Führung entlang der zumindest einen Führungsschiene 20 besonders sicher vor einer seitlichen Krafteinwirkung geschützt sind. In den Fig. 4 bis 6 sind zwei derart mit dem wenigstens einen Zugseil 18 verbundene Mitnehmer 17 nicht ersichtlich. Darum wurde auf die Verwendung eines Bezugszeichens für den ersten Mitnehmer, den zweiten Mitnehmer, die erste Stirnseite und die zweite Stirnseite verzichtet.

Bevorzugt kann vorgesehen sein, dass die Förderanlage 16 eine Abwurfvorrichtung 27 umfasst, welche dazu ausgebildet ist das längliche Stückgut 2 in dem Förderbereich 19 seitlich von den beweglich gelagerten Mitnehmern 17 abzuwerfen. Dadurch ergibt sich der Vorteil, dass die Förderanlage 16 zur Sortierung des länglichen Stückguts 2 verwendet werden kann, wobei unterschiedliche Stückguter 2 entlang des Förderbereiches 19 von den beweglich gelagerten Mitnehmern 17 abgeworfen werden können.

Besonders bevorzugt kann vorgesehen sein, dass die Förderanlage 16 entlang des Förderbereiches 19 zumindest eine Abwurfvorrichtung 27 umfasst. Insbesondere ist vorgesehen, dass entlang des Förderbereiches 19 zwei, bevorzugt drei, besonders bevorzugt vier Abwurfvorrichtungen 27 angeordnet sind.

Bevorzugt kann vorgesehen sein, dass die Abwurfvorrichtung 27 der Förderanlage 16 dazu ausgebildet ist das längliche Stückgut 2 auf beiden Seiten des Förderbereiches 19 abzuwerfen. Dadurch ergibt sich der Vorteil, dass bei einem Sortierprozess der Förderanlage 16 mehr Sortiermöglichkeiten für das längliche Stückgut 2 zur Verfügung stehen, wodurch sich mehrere Möglichkeiten für die Ausbildung einer Sortierstraße ergeben.

Bevorzugt kann vorgesehen sein, dass die Abwurfvorrichtung 27 ein Stoßelement umfasst, welches dazu ausgebildet ist, das längliche Stückgut 2 seitlich von den beweglich gelagerten Mitnehmern 17 abzuwerfen.

Besonders bevorzugt kann das Stoßelement Teil der Abwurfvorrichtung 27 sein.

Bevorzug kann vorgesehen sein, dass die Abwurfvorrichtung 13 der Förderanlage 1 als Exzenterabschieber und/oder als Rotationsabschieber ausgebildet ist. Dies kann insbesondere dann vorgesehen sein, wenn das Fördersystem als Vorsortierspitzenzug eingesetzt wird. Dabei kann bevorzugt vorgesehen sein, dass Abschiebelineare das längliche Stückgut von den beweglich gelagerten Mitnehmern 3 abwerfen.

Besonders bevorzugt kann die Abwurfvorrichtung 27 im Wesentlichen hufeisenförmig oder U-förmig ausgebildet sein.

Besonders bevorzugt kann die Abwurfvorrichtung 27 entlang einer in Längstransportrichtung 21 ausgerichteten Achse drehbar gelagert sein.

Besonders bevorzugt umfasst die Abwurfvorrichtung 27 drei Stellungen, wobei in einer ersten Stellung die Abwurfvorrichtung 27 in einer Neutralstellung ist, wobei in einer zweiten Stellung die Abwurfvorrichtung 27 das längliche Stückgut 2 auf einer ersten Seite von den beweglich gelagerten Mitnehmer 17 aus dem Förderbereich 19 abwirft, wobei in einer dritten Stellung die Abwurfvorrichtung 27 das längliche Stückgut 2 auf einer zweiten Seite von den beweglich gelagerten Mitnehmern 17 aus dem Förderbereich 19 abwirft.

Bevorzugt kann vorgesehen sein, dass die Förderanlage 16 Teil einer Sortieranlage ist.

Nachfolgend werden Grundsätze für das Verständnis und die Auslegung gegenständlicher Offenbarung angeführt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Das Bindewort "oder" ist als inklusiv und nicht als exklusiv zu interpretieren. Sofern es sich aus dem Kontext nicht anders ergibt, umfasst "A oder B" auch "A und B", wobei "A" und "B" beliebige Merkmale darstellen.

Mittels eines ordnenden Zahlwortes, beispielweise "erster", "zweiter" oder "dritter", werden insbesondere ein Merkmal X bzw. ein Gegenstand Y in mehreren Ausführungsformen unterschieden, sofern dies nicht durch die Offenbarung der Erfindung anderweitig definiert wird. Insbesondere bedeutet ein Merkmal X bzw. Gegenstand Y mit einem ordnenden Zahlwort in einem Anspruch nicht, dass eine unter diesen Anspruch fallende Ausgestaltung der Erfindung ein weiteres Merkmal X bzw. einen weiteren Gegenstand Y aufweisen muss.

Ein "im Wesentlichen" in Verbindung mit einem Zahlenwert mitumfasst eine Toleranz von ± 10% um den angegebenen Zahlenwert, sofern es sich aus dem Kontext nicht anders ergibt.

Bei Wertebereichen sind die Endpunkte mitumfasst, sofern es sich aus dem Kontext nicht anders ergibt.

## Patentansprüche

1. Umlenkvorrichtung (1) für längliches Stückgut (2), wobei die Umlenkvorrichtung (1) einen Aufnahmebereich (3) aufweist, wobei der Aufnahmebereich (3) dazu ausgebildet ist, das längliche Stückgut (2) eingangsseitig im Quertransport aufzunehmen und das längliche Stückgut (2) ausgangsseitig im Längstransport abzugeben, wobei die Umlenkvorrichtung (1) zumindest zwei in einem Winkel zueinander angeordnete bandförmige Förderer (4, 5) in Längstransportrichtung (21) umfasst, wobei die zumindest zwei bandförmigen Förderer (4, 5) in einem Betriebszustand der Umlenkvorrichtung (1) den Aufnahmebereich (3) aufspannen, **dadurch gekennzeichnet, dass** an der ersten und/oder zweiten Querseite (12, 13) der Umlenkvorrichtung (1) zumindest ein Förderrad (14) zur Beschleunigung des länglichen Stückgutes (2) in die Längstransportrichtung (21) angeordnet ist.

2. Umlenkvorrichtung (1) nach Anspruch 1, **dadurch gekennzeichnet, dass** durch die zumindest zwei bandförmigen Förderer (4, 5) ein V-förmiges Profil des Aufnahmebereiches (3) aufgespannt ist.

3. Umlenkvorrichtung (1) nach Anspruch 1 oder 2, **dadurch gekennzeichnet, dass** der Aufnahmebereich (3) lediglich durch die zumindest zwei bandförmigen Förderer (4, 5) begrenzt ist.

4. Umlenkvorrichtung (1) nach einem der Ansprüche 1 bis 3, **dadurch gekennzeichnet, dass** die zumindest zwei bandförmigen Förderer (4, 5) in einem Winkel von größer gleich 60 Grad, bevorzugt größer gleich 80 Grad, besonders bevorzugt größer gleich 100 Grad, zueinander angeordnet sind.

5. Umlenkvorrichtung (1) nach einem der Ansprüche 1 bis 4, **dadurch gekennzeichnet, dass** die zumindest zwei bandförmigen Förderer (4, 5) in einem Winkel von kleiner gleich 180 Grad, bevorzugt kleiner gleich 160 Grad, besonders bevorzugt kleiner gleich 140 Grad, zueinander angeordnet sind.

6. Umlenkvorrichtung (1) nach einem der Ansprüche 1 bis 5, **dadurch gekennzeichnet, dass** die zumindest zwei bandförmigen Förderer (4, 5) in einem Winkel von im Wesentlichen 110 Grad zueinander angeordnet sind.

7. Umlenkvorrichtung (1) nach einem der Ansprüche 1 bis 6, **dadurch gekennzeichnet, dass** die zumindest zwei bandförmigen Förderer (4, 5) in dem Betriebszustand der Umlenkvorrichtung (1) arretiert sind, wobei wenigstens ein bandförmiger Förderer (4) der zumindest zwei bandförmigen Förderer (4, 5) in einem Wartungszustand der Umlenkvorrichtung (1) in eine Wartungsposition schwenkbar ist.

8. Umlenkvorrichtung (1) nach einem der Ansprüche 1 bis 7, **dadurch gekennzeichnet, dass** wenigstens ein erster bandförmiger Förderer (4) der zumindest zwei bandförmigen Förderer (4, 5) an wenigstens einem ersten Befestigungsarm (6) befestigt ist.

9. Umlenkvorrichtung (1) nach Ansprüche 7 und 8, **dadurch gekennzeichnet, dass** der wenigstens eine erste Befestigungsarm (6) zum Ausschwenken in die Wartungsposition der Umlenkvorrichtung (1) gegenüber wenigstens einem zweiten bandförmigen Förderer (5) der zumindest zwei bandförmigen Förderer (4, 5) schwenkbar gelagert ist.

10. Sortieranlage mit wenigstens einer Umlenkvorrichtung (1) nach einem der Ansprüche 1 bis 9.

11. Sortieranlage nach Anspruch 10, **dadurch gekennzeichnet, dass** die Umlenkvorrichtung (1) ausgangsseitig das längliche Stückgut (2) an eine Förderanlage (16) abgibt, dass die Förderanlage (16) zum Längstransport von länglichem Stückgut (2) eine Vielzahl beweglich gelagerter Mitnehmer (17) umfasst, dass die Vielzahl der Mitnehmer (17) mittels wenigstens eines Zugseiles (18) zu einem umlaufenden Zugband verbunden sind, dass die Förderanlage (16) in einem Förderbereich (19) zumindest eine Führungsschiene (20) in Längstransportrichtung (21) umfasst, dass jeder Mitnehmer (17) zumindest eine Laufrolle (22) zur Führung des Mitnehmers (17) entlang der zumindest einen Führungsschiene (20) umfasst, und dass jeder Mitnehmer(17) in dem Förderbereich (19) an der zumindest einen Führungsschiene (20) kippsicher gelagert ist.

## Claims

1. A deflecting device (1) for an elongate item (2), wherein the deflecting device (1) has a receiving region (3), wherein the receiving region (3) is designed to receive the elongate item (2) in cross transport on the input side and to discharge the elongate item (2) in longitudinal transport on the output side, wherein the deflecting device (1) comprises at least two belt-type conveyors (4, 5) in the longitudinal transport direction which are arranged at an angle relative to one another, the at least two belt-type conveyors (4, 5) spanning the receiving region (3) when the deflecting device (1) is in an operating state, **characterized in that** at least one conveyor wheel (14) is arranged on the first and/or second transverse side (12, 13) of the deflecting device (1) for the purpose of accelerating the elongate item (2) in the direction of conveyance.

2. The deflecting device (1) according to claim 1, **characterized in that** a V-shaped profile of the receiving region (3) is spanned by the at least two belt-type conveyors (4, 5).

3. The deflecting device (1) according to claim 1 or 2, **characterized in that** the receiving region (3) is delimited only by the at least two belt-type conveyors (4, 5).

4. The deflecting device (1) according to any one of claims 1 to 3, **characterized in that** the at least two belt-type conveyors (4, 5) are arranged relative to one another at an angle of greater than or equal to 60 degrees, preferably greater than or equal to 80 degrees, especially preferably greater than or equal to 100 degrees.

5. The deflecting device (1) according to any one of claims 1 to 4, **characterized in that** the at least two belt-type conveyors (4, 5) are arranged relative to one another at an angle of less than or equal to 180 degrees, preferably less than or equal to 160 degrees, especially preferably less than or equal to 140 degrees.

6. The deflecting device (1) according to any one of claims 1 to 5, **characterized in that** the at least two belt-type conveyors (4, 5) are arranged relative to one another at an angle of substantially 110 degrees.

7. The deflecting device (1) according to any one of claims 1 to 6, **characterized in that** the at least two belt-type conveyors (4, 5) are locked when the deflecting device (1) is in the operating state, with at least one belt-type conveyor (4) from among the at least two belt-type conveyors (4, 5) being pivotable into a maintenance position when the deflecting device (1) is in a maintenance state.

8. The deflecting device (1) according to any one of claims 1 to 7, **characterized in that** at least one first belt-type conveyor (4) from among the at least two belt-type conveyors (4, 5) is attached to at least one first fastening arm (6).

9. The deflecting device (1) according to claims 7 and 8, **characterized in that** the at least one first fastening arm (6) is mounted so as to pivot relative to at least one second belt-type conveyor (5) from among the at least two belt-type conveyors (4, 5) for the purpose of pivoting out into the maintenance position of the deflecting device (1).

10. A sorting system with a deflecting device (1) according to any one of claims 1 to 9.

11. The sorting system according to claim 10, **characterized in that** the deflecting device (1) delivers the elongate item (2) to a conveyor system (16) on the output side, that the conveyor system (16) for the longitudinal transport of an elongate item (2) comprises a multiplicity of movably mounted drivers (17), that the multiplicity of drivers (17) are connected to a circulating traction belt by means of at least one traction cable (18), that the conveyor system (16) comprises at least one guide rail (20) in the longitudinal transport direction (21) in a conveying region (19), that each driver (17) comprises at least one roller (22) for guiding the driver (17) along the at least one guide rail (20), and that each driver (17) in the conveying region (19) is mounted in a tilt-proof manner on the at least one guide rail (20).

## Revendications

1. Dispositif de déviation (1) pour matériau en stuc long (2), le dispositif de déviation (1) présentant une zone de réception (3), la zone de réception (3) étant conçue pour recevoir le matériau en stuc long (2) côté entrée dans le transport transversal et pour libérer le matériau en stuc long (2) côté sortie dans le transport longitudinal, le dispositif de déviation (1) comprenant au moins deux chargeurs (4, 5) en forme de bande disposés à un angle l'un par rapport à l'autre dans la direction de transport longitudinal (21), les au moins deux chargeurs (4, 5) en forme de bande serrant la zone de réception (3) dans un état de fonctionnement du dispositif de déviation (1), **caractérisé en ce que** sur le premier et/ou le deuxième côté transversal (12, 13) du dispositif de déviation (1) est disposée au moins une roue de forage (14) pour accélérer le matériau en stuc long (2) dans la direction de transport longitudinal (21).

2. Dispositif de déviation (1) selon la revendication 1, **caractérisé en ce qu'**un profil en forme de V de la zone de réception (3) est tendu par les au moins deux dispositifs de demande (4, 5) en forme de bande.

3. Dispositif de déviation (1) selon la revendication 1 ou 2, **caractérisé en ce que** la zone de réception (3) n'est limitée que par les au moins deux dispositifs de demande (4, 5) en forme de bande.

4. Dispositif de déviation (1) selon l'une quelconque des revendications 1 à 3, **caractérisé en ce que** les au moins deux dispositifs de chargement (4, 5) en forme de bande sont disposés l'un par rapport à l'autre selon un angle supérieur à 60 degrés, de préférence supérieur à 80 degrés, de manière particulièrement préférée supérieur à 100 degrés.

5. Dispositif de déviation (1) selon l'une quelconque des revendications 1 à 4, **caractérisé en ce que** les au moins deux dispositifs de chargement (4, 5) en forme de bande sont disposés l'un par rapport à l'autre à un angle inférieur ou égal à 180 degrés, de préférence inférieur ou égal à 160 degrés, de manière particulièrement préférée inférieur ou égal à 140 degrés.

6. Dispositif de déviation (1) selon l'une quelconque des revendications 1 à 5, **caractérisé en ce que** les au moins deux dispositifs de chargement (4, 5) en forme de bande sont disposés à un angle de sensiblement 110 degrés l'un par rapport à l'autre.

7. Dispositif de déviation (1) selon l'une quelconque des revendications 1 à 6, **caractérisé en ce que** les au moins deux dispositifs de chargement (4, 5) en forme de bande sont bloqués dans l'état de fonctionnement du dispositif de déviation (1), au moins un dispositif de chargement (4) en forme de bande des au moins deux dispositifs de chargement (4, 5) en forme de bande pouvant pivoter dans une position de maintenance dans un état de maintenance du dispositif de déviation (1).

8. Dispositif de déviation (1) selon l'une quelconque des revendications 1 à 7, **caractérisé en ce qu'**au moins un premier dispositif de chargement (4) en forme de bande des au moins deux dispositifs de chargement (4, 5) en forme de bande est fixé à au moins un premier bras de fixation (6).

9. Dispositif de déviation (1) selon les revendications 7 et 8, **caractérisé en ce que** le au moins un premier bras de fixation (6) est monté pivotant pour le pivotement dans la position de maintenance du dispositif de déviation (1) par rapport à au moins un deuxième dispositif de chargement en forme de bande (5) des au moins deux dispositifs de chargement en forme de bande (4, 5).

10. Système de tri avec au moins un dispositif de déviation (1) selon l'une quelconque des revendications 1 à 9.

11. Installation de tri selon la revendication 10, **caractérisée en ce que** le dispositif de déviation (1) délivre le stuc allongé (2) à une installation de demande (16) côté sortie, **en ce que** l'installation de demande (16) pour le transport long de stuc allongé (2) comprend une pluralité d'entraîneurs (17) montés mobiles, **en ce que** la pluralité d'entraîneurs (17) sont reliés au moyen d'au moins un câble de traction (18) à une bande de traction périphérique, **en ce que** l'installation de demande (16) comprend au moins un rail de guidage (20) dans une zone de demande (19) dans la direction de transport long (21), **en ce que** chaque entraîneur (17) comprend au moins un galet de roulement (22) pour le guidage de l'entraîneur (17) le long d'au moins un rail de guidage (20), et **en ce que** chaque entraîneur(17) est monté de manière à ne pas basculer dans la zone de demande (19) sur au moins un rail de guidage (20).
